# EUROPEAN PATENT APPLICATION

(11) **EP 2 374 730 A1**
(43) Date of publication of application: **12.10.2011**
(21) Application number: 10159261.6
(22) Date of filing: 07.04.2010
(51) Int. Cl.: B65D 77/20, B65B 7/16, B65B 7/28

(54) **Method, device and stamp for producing a sealed container as well as a sealed container with a product to be preserved therein**

(71) Applicant: Kamp, Ton, 7596 MN Rossum (Ov.) (NL)
(72) Inventor: Kamp, Ton, 7596 MN Rossum (Ov.) (NL)
(74) Representative: Vernout, Robert

(57) **Abstract**

Method for producing a sealed container with a product to be preserved therein, wherein a tray having a closed-circumferential flange (9,10) at its upper side is placed in a die with said product in said tray, said flange (9,10) having at least a plastic upper side, wherein a plastic sheet (14) is placed over the flange (9,10), and wherein a stamp (22) is pressed against said plastic sheet (14) and said flange (9,10) while the lower side of the flange (9,10) abuts a counter press surface of the die (20) whereby said plastic sheet (14) is sealed against said flange (9,10), wherein said stamp (22) is provided with a multitude of closed-circumferential parallel protruding ribs (28), and wherein seen from above said ribs (28) extend within the area of the flange (9,10), such that a multitude of closed-circumferential parallel seals (30) between said plastic sheet (14) and said flange (9,10) is obtained.

## Description

The invention relates to a method for producing a sealed container with a product to be preserved therein, said container comprising a tray having a closed-circumferential flange at its upper side, said flange having at least a plastic upper side, and a plastic sheet which is sealed against said flange. Such a sealed container is described in WO-A-2007/091004.

Sealed containers aim to provide an airtight and moisture tight package for the products, wherein the preferably fresh or cooked products have a long shelf life. In many cases also an inert gas is enclosed in the container in order to replace atmospheric air. Furthermore the container is preferably suitable for being heated in a microwave or conventional oven and/or for being kept in a refrigerator or freezer.

Prior art containers are often entirely made from plastic. In order to relieve the environmental burden replacement materials which are more environmental friendly are being sought. One such material is plastic laminated carton board. One feature of plastic laminated carton board is that it cannot be plastically deformed, whereby a different production method is necessary, namely to fold it from a blank. One problem thereof is, that the flange, which is bent outward, comprises overlapping areas where the carton is double layered, and as a consequence, there are steps present along the circumference of the flange. These steps are difficult to seal in an airtight and moisture tight manner with the plastic sheet.

The invention aims at a reliable and easy method for sealing the container, whether said container is made entirely from plastic or from plastic laminated carton board.

According to the invention the tray having the closed-circumferential flange at its upper side is placed in a die with said product in said tray, said flange having at least a plastic upper side. The plastic sheet is placed over the flange, and a stamp is pressed against said plastic sheet and said flange while the lower side of the flange abuts a counter press surface of the die whereby said plastic sheet is sealed against said flange. According to the invention said stamp is provided with a multitude of closed-circumferential parallel protruding ribs, wherein seen from above said ribs extend within the area of the flange, such that a multitude of closed-circumferential parallel seals between said plastic sheet and said flange is obtained. The multitude of parallel narrow seals provides a very effective gas barrier, which is more reliable than one wide seal. In particular when a carton board tray is used, the narrow ribs of the stamp are able to press the plastic sheet deeper into the double layered parts of the carton and thereby reduce the height of the step in the flange, at the same time more firmly pressing the plastic sheet against the plastic layer of the cardboard while producing the seal.

Said seal is preferably a hot seal, a cold seal or an ultrasonic weld. In one embodiment said tray is at least substantially made from plastic, in another embodiment said tray is at least substantially folded from carton board laminated with a plastic top layer.

Said flange and said ribs on said stamp are usually substantially polygonal shaped, in particular rectangular, seen from above. Preferably said ribs are curved in the corner portions of said polygon. In the preferred embodiment, the flange of the substantially carton tray extends in the planes of the side walls of the tray before sealing, and is bent outward during sealing. A problem that occurs during said bending is that the edges of the flanges in the corners get stuck behind the ribs, with the plastic sheet being wrinkled in the gap between two ribs, whereby the flange is damaged. In order to prevent this, the press surface of said ribs in said curved portions are wider than in the straight portions of said ribs. Hereby the ribs in the corners form radial slide tracks for the carton edges. Preferably the press surface of said ribs in said curved portions are at least 25%, more preferably at least 50% wider than in the straight portions of said ribs. Preferably the press surface of said ribs in said curved portions are so wide that two neighbouring ribs touch each other or at least almost touch each other.

Preferably said stamp is provided with a protruding closed-circumferential knife for cutting the plastic sheet adjacent said seal.

Preferably said plastic sheet is placed over said flange at a distance from said counter press surface which is larger then the height of said flange before sealing, and an inert gas is fed into said tray through the gap between the plastic sheet and the flange before sealing.

Said stamp is preferably provided with suction openings in the area inside said closed-circumferential ribs for holding the plastic sheet before and during said sealing.

Said die preferably comprises a lower die and an upper die, said upper die being movable relative to said lower die, wherein said plastic sheet is fed and clamped between said lower die and said upper die before said sealing.

The invention also relates to a device for producing a sealed container with a product to be preserved therein, a die wherein a tray having a closed-circumferential flange at its upper side can be placed, and a stamp arranged to be pressed against a plastic sheet placed over the flange while the lower side of the flange abuts a counter press surface of the die such that said plastic sheet is sealed against said flange, wherein said stamp is provided with a multitude of closed-circumferential parallel protruding ribs, and wherein seen from above said ribs extend within the area of the flange, such that a multitude of closed-circumferential parallel seals between said plastic sheet and said flange is obtained during sealing.

Furthermore the invention relates to a stamp for sealing a container with a product to be preserved therein, wherein said stamp is provided with a multitude of closed-circumferential parallel protruding ribs.

The invention also relates to a sealed container with a product to be preserved therein, comprising a tray having a closed-circumferential flange at its upper side, said flange having at least a plastic upper side, and a plastic sheet extending over the flange and sealed in an gastight manner thereto, wherein said container is sealed with a multitude of closed-circumferential parallel seals between said plastic sheet and said flange. In a preferred embodiment said tray is at least substantially folded from carton board laminated with a plastic top layer.

The invention will be illustrated by means of an embodiment as shown in the figures, wherein:

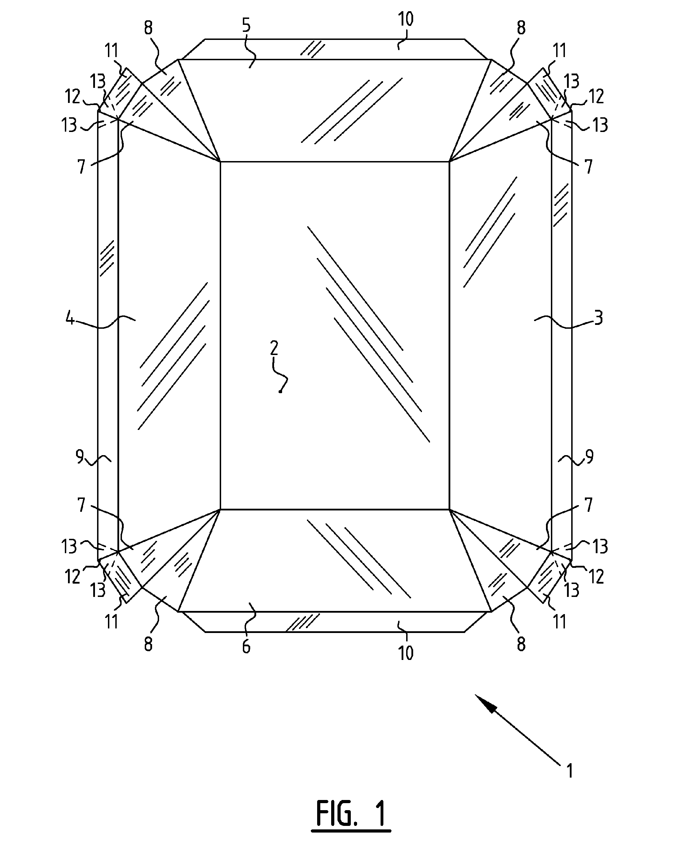

Figure 1 shows a top view of a carton board blank for a container;
Figure 2 shows a perspective view of a partially folded blank of figure 1;
Figure 3 shows a perspective view of a container being a folded and sealed blank of figure 1;
Figure 4 shows a partial perspective view of a corner of the container of figure 3;
Figure 5 shows a perspective cross section of a device for producing the container of figure 3; and
Figure 6 shows a partial perspective cross section of the device of figure 5.

The blank 1 comprises a bottom part 2, side walls 3, 4, 5, 6, connecting parts 7, 8 and flange parts 9, 10, 11, which are mutually connected along folding lines. The blank 1 is comprised of a carton board, on top of which a PET laminate sheet is attached. The lines 12 are cuts in the carton board. The laminate sheet is however not cut at the location of lines 12. On both sides of the cutting lines 12 areas 13 extend where the laminate sheet is not attached to the carton board. These areas are triangular shaped, wherein the point of the triangular areas 13 coincide with the cuts 12 and the folding line of the flange parts 9, 11. The outer ends of flange parts 10 are cut oblique.

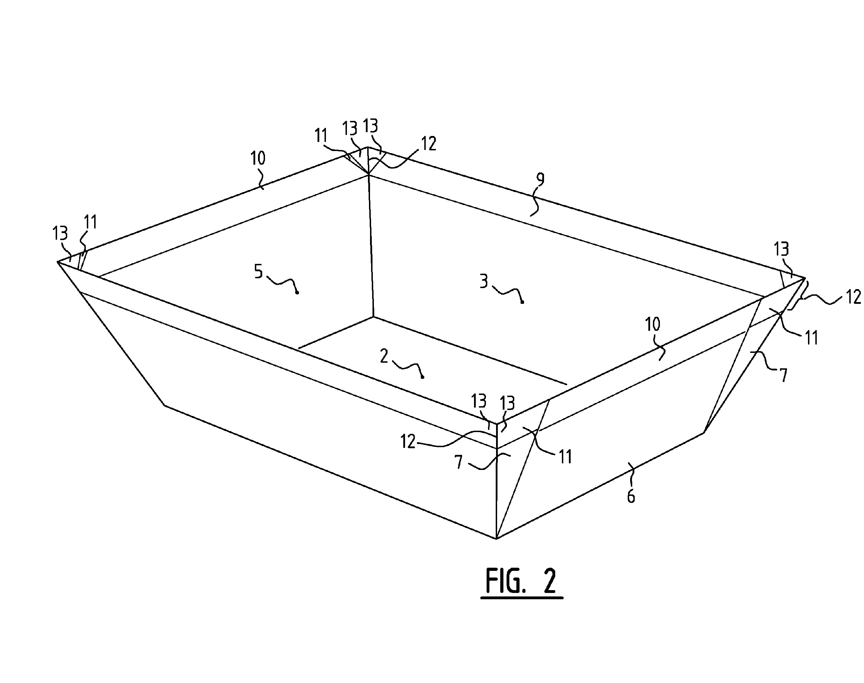

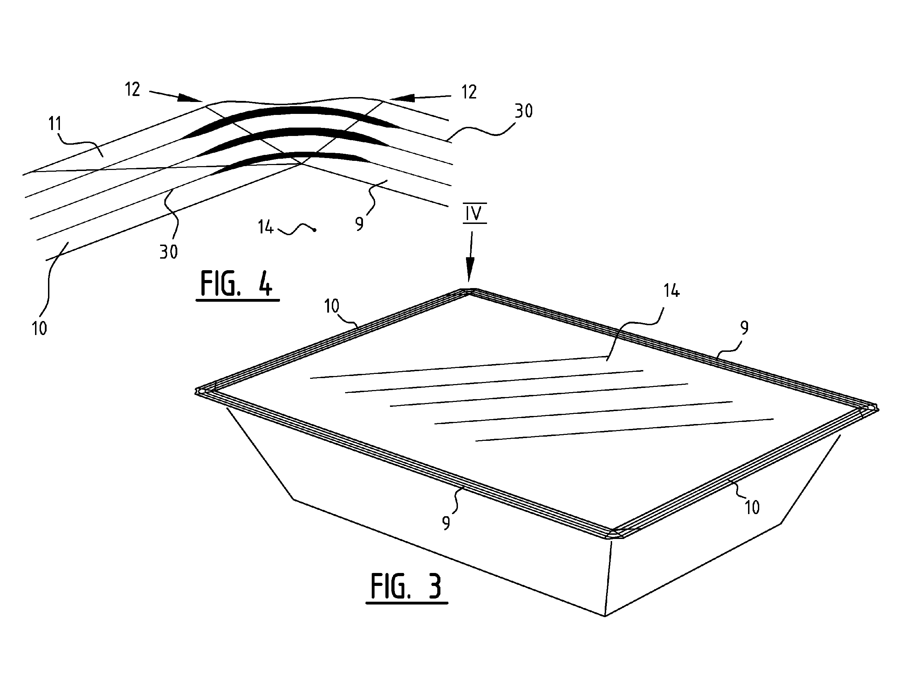

In order to form the container as shown in figure 3, the connecting parts 7, 8 at the corners of the tray are folded outward, while the side walls 3, 4, 5, 6 are folded upward, and are then folded against the respective side walls 5, 6, as shown in figure 2. The entire outer surface of the connecting part 8 is glued to the outer surface of the side walls 5, 6. Furthermore the inner surface of flange part 11 is glued to the entire overlapping part of the outer surface of flange part 10.

The tray is filled with a product, for instance a cooked meal.

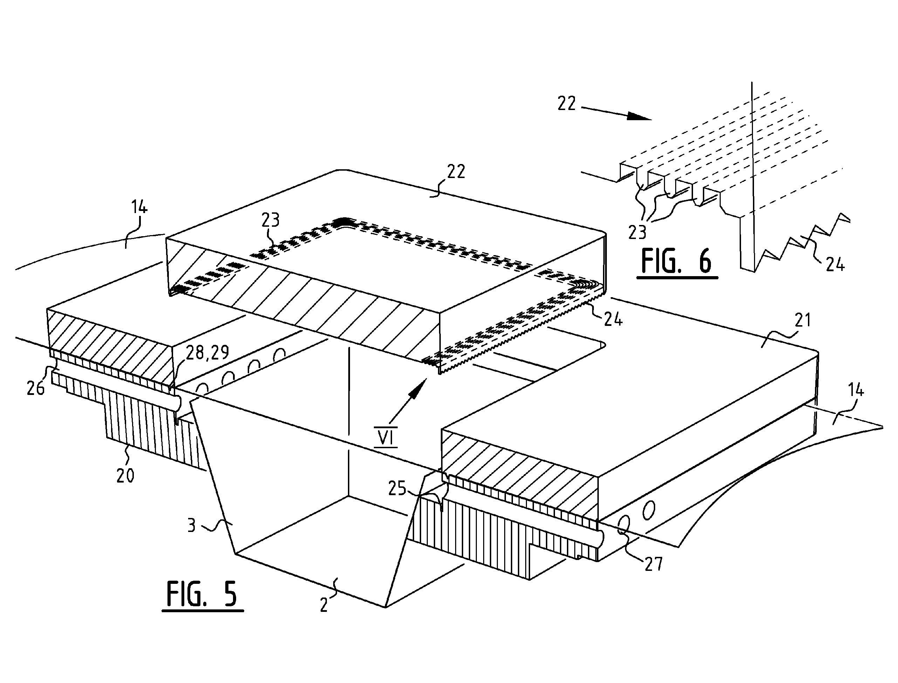

A device for sealing the tray is shown in figures 5 and 6. It comprises a lower die 20, an upper die 21, and a stamp 22. The lower die is generally plate shaped, and is provided with a generally rectangular aperture (seen from above) with oblique side walls, having such dimensions as to support at least parts of the side walls 3, 4, 5, 6 of the tray. The bottom 2 is also supported by a plate (not shown). The upper die 21 is also generally plate shaped, and is also provided with a generally rectangular aperture (seen from above), which is slightly larger than the aperture in the lower die 20. The upper side of the aperture in the lower die 20 is widened such that it matches the aperture in the upper die 21. The stamp 22 is generally rectangular and plate shaped, having dimensions corresponding to the aperture in the upper die 20 and the widened part of the aperture in the lower die 21. The lower side of stamp 22 is provided along its circumference with a plurality, for instance three or four, sealing ribs 23, as shown in figure 6. A knurled cutting knife 24 extends along the circumference outside the sealing ribs 23. The lower die 20 is provided with a recess 25 for accommodating the knife 24 during sealing.

The tray is held in the lower die 20 in such a manner that the upright circumferential flange parts 9, 10, 11, 12 extends above the horizontal surface of the widened aperture in the lower die 20. The upper edge of the flange parts 9, 1, 11, 12 extend at a small distance under the upper surface of the lower die 20. The lower die 20 is provided with supply channels 26 for feeding an inert gas to the tray, and with exhaust channels 27 for discharging air from the tray. The openings of the channels 26, 27 are provided in the side walls of the widened part of the aperture in the lower die 20.

The upper die is movable in vertical direction so as to clamp the sheet 14 between the upper die 21 and the lower die 20. In order to secure the sheet 14 the upper die 21 is provided with a circumferential rib 28 and the lower die 20 is provided with a corresponding recess 29.

In order to seal the tray with sheet 14, the sheet 14 is fed between the lower die 20 and the upper die 21. Then the upper die 21 is lowered onto the lower die 22 such that the sheet 14 is clamped in a fixed position above the tray. Then the tray is filled with an inert gas through the channels 26 while air is exhausted from the tray through channels 27. Subsequently the stamp 22 is lowered towards the lower die 20, thereby cutting a rectangular lid from the sheet 14, and moving said lid downward onto the upper edges of the flange parts 9, 10, 11, 12. The sheet 14 is held against the stamp 22 by means of suction holes in the stamp (not shown). The sheet 14 is then pushed further against the flanges 9, 10, 11, 12 of the tray, while these flange parts 9, 10, 11, 12 bend outward to form a flat closed-circumferential flange.

While the flange parts 9, 10, 11, 12 are bent outward the distance between the adjacent edges of flange parts 9, 11 becomes larger, whereby splits are formed. The plastic laminate sheet of the areas 13 is stretched thereby and this sheet thereby spans over the splits in the carton board. Then the transparent lid 14 is sealed to the laminate sheet on the circumferential flange by means of said sealing ribs 23 so as to form a plurality of closed-circumferential hot seals 30, whereby the container is closed in a gas tight manner. In order to form the hot seals 30, the stamp is provided with electric heating elements near the sealing ribs 23 (not shown).

In order to prevent that the upper edges of the flange parts 11, 12 get stuck behind the sealing ribs 23 in the corners, whereby these flange part would be destroyed, the sealing surface of the ribs 23 in the corners is widened, as shown in figure 4, so as to form an radially outward slide track. The surfaces of the ribs 23 in the corners are so wide that the ribs 23 almost touch each other.

Finally the upper die 21 and the stamp 22 are moved upward and the sealed tray is taken out.

## Claims

1. A method for producing a sealed container with a product to be preserved therein, wherein a tray having a closed-circumferential flange at its upper side is placed in a die with said product in said tray, said flange having at least a plastic upper side, wherein a plastic sheet is placed over the flange, and wherein a stamp is pressed against said plastic sheet and said flange while the lower side of the flange abuts a counter press surface of the die whereby said plastic sheet is sealed against said flange, **characterized in that** said stamp is provided with a multitude of closed-circumferential parallel protruding ribs, wherein seen from above said ribs extend within the area of the flange, such that a multitude of closed-circumferential parallel seals between said plastic sheet and said flange is obtained.

2. The method in accordance with claim 1, wherein said seal is a hot seal, a cold seal or an ultrasonic weld.

3. The method in accordance with claim 1 or 2, wherein said tray is at least substantially made from plastic.

4. The method in accordance with claim 1 or 2, wherein said tray is at least substantially folded from carton board laminated with a plastic top layer.

5. The method in accordance with any of the previous claims, wherein said flange and said ribs on said stamp are substantially polygonal shaped, seen from above.

6. The method in accordance with claim 5, wherein said ribs are curved in the corner portions of said polygon.

7. The method in accordance with any of the previous claims, wherein the flange of the tray extends in the planes of the side walls of the tray before sealing, and is bent outward during sealing.

8. The method in accordance with claim 6 and 7, wherein the press surface of said ribs in said curved portions are wider than in the straight portions of said ribs.

9. The method in accordance with claim 9, wherein the press surface of said ribs in said curved portions are at least 25%, preferably at least 50% wider than in the straight portions of said ribs.

10. The method in accordance with claim 10, wherein the press surface of said ribs in said curved portions are so wide that two neighbouring ribs touch each other or at least almost touch each other.

11. The method in accordance with any of the previous claims, wherein said plastic sheet is placed over said flange at a distance from said counter press surface which is larger then the height of said flange before sealing, and wherein an inert gas is fed into said tray through the gap between the plastic sheet and the flange before sealing.

12. A device for producing a sealed container with a product to be preserved therein, a die wherein a tray having a closed-circumferential flange at its upper side can be placed, and a stamp arranged to be pressed against a plastic sheet placed over the flange while the lower side of the flange abuts a counter press surface of the die such that said plastic sheet is sealed against said flange, **characterized in that** said stamp is provided with a multitude of closed-circumferential parallel protruding ribs, wherein seen from above said ribs extend within the area of the flange, such that a multitude of closed-circumferential parallel seals between said plastic sheet and said flange is obtained during sealing.

13. A stamp for sealing a container with a product to be preserved therein, **characterized in that** said stamp is provided with a multitude of closed-circumferential parallel protruding ribs.

14. A sealed container with a product to be preserved therein, comprising a tray having a closed-circumferential flange at its upper side, said flange having at least a plastic upper side, and a plastic sheet extending over the flange and sealed in an gastight manner thereto, **characterized in that** said container is sealed with a multitude of closed-circumferential parallel seals between said plastic sheet and said flange.

15. The sealed container in accordance with claim 14, wherein said tray is at least substantially folded from carton board laminated with a plastic top layer.
